Europäisches Patentamt

(19) European Patent Office

Office européen des brevets

(11) Numéro de publication: **0 149 580**
**A2**

(12) # DEMANDE DE BREVET EUROPEEN

(21) Numéro de dépôt: **85400074.2**

(22) Date de dépôt: **16.01.85**

(51) Int. Cl.⁴: **C 03 B 9/193**
**C 03 B 9/16**

(30) Priorité: **18.01.84 FR 8400759**

(43) Date de publication de la demande:
**24.07.85 Bulletin 85/30**

(84) Etats contractants désignés:
**AT BE CH DE GB IT LI LU NL SE**

(71) Demandeur: **VERRERIES DE GRAVILLE**
**38, rue A. Tourres**
**F-76600 Le Havre(FR)**

(72) Inventeur: **Boutier, Piere Gaston**
**92 rue Voltaire**
**Le Havre (Seine Maritime)(FR)**

(74) Mandataire: **Cabinet BERT, DE KERAVENANT &**
**HERRBURGER**
**115, Boulevard Haussmann**
**F-75008 Paris(FR)**

(54) **Installation de fabrication de récipients en verre de type bouteille et flacon à ouverture moyenne ou étroite mettant en oeuvre le procédé soufflé-soufflé ou pressé-soufflé.**

(57) a) Installation de fabrication de récipients en verre de type bouteille et flacon à ouverture moyenne ou étroite mettant en oeuvre le procédé soufflé-soufflé ou pressé-soufflé,

b) Installation caractérisée en ce que le mécanisme comporte un fourreau en deux parties, une partie supérieure (54) et une partie inférieure (53), un ressort de compression (59) agissant sur le fourreau (53, 54), un vérin auxiliaire (66, 68) relié au piston (18) du vérin principal, un fond mobile (37) délimitant avec le piston principal (18) l'une des chambres (33) du vérin principal.

c) L'incention trouve son application principale dans l'industrie du conditionnement de produits liquides.

EP 0 149 580 A2

./...

Fig.1

1

"Installation de fabrication de récipients en verre de type bouteille et flacon à ouverture moyenne ou étroite mettant en oeuvre le procédé soufflé-soufflé ou pressé-soufflé".

La présente invention concerne une installation de fabrication de récipients en verre de type bouteille et flacon à ouverture moyenne ou étroite, mettant en oeuvre le procédé soufflé-soufflé, ou pressé-soufflé, installation comportant des moules ébaucheurs et des moules finisseurs avec des caissons modulaires équipés en simple ou multiple paraison, recevant des mécanismes de commande placés sous les moules ébaucheurs pour commander les poinçons, chaque mécanisme comprenant au moins un vérin à double effet dont le piston commande le mouvement du poinçon de pressage, un circuit de refroidissement dont le fluide circule dans le mécanisme et dans le poinçon, une alimentation en fluide moteur pour commander le vérin.

Une telle installation encore appelée "machine à verre" fait partie de l'installation plus générale qui se compose d'un four à verre distribuant des masses de verre (gobs) de poids (volume) déterminé, par l'intermédiaire de goulottes à une batterie de dispositifs de moulage formé chacun par une première partie ou ébaucheur et une deuxième partie ou finisseur.

L'installation constitue un ensemble très important qui est entretenu par la rénovation de certaines parties sans modifications des pièces qui doivent rester compatibles (encombrement et fonctionnement) avec l'ensemble.

De façon plus détaillée :

Le four, d'un poids important de l'ordre de plusieurs centaines de tonnes, est installé sur une charpente métallique au-dessus des différentes machines de moulage qu'il doit alimenter.

En sortie de four, il y a un distributeur qui fournit des masses de verre de quantité appropriée à des goulottes associées à chaque poste des différentes machines de moulage.

Les machines de moulage se composent de plusieurs postes, chacun servant à fabriquer un ou plusieurs récipients à partir des "gobs" qu'il reçoit.

Chaque poste se compose d'un ébaucheur recevant le gob pour former une ébauche creuse (paraison) obtenue soit par insufflation d'air (procédé "soufflé-soufflé") ou soit par introduction d'un mandrin ou noyau ou poinçon (procédé "pressé-soufflé").

L'ébauche ou paraison obtenue est transférée après ouverture du moule ébaucheur dans le moule finisseur. Le transfert se fait par un moyen de transfert portant la paraison fixée par la bague de la bouteille. Dans le moule finisseur, l'ébauche est mise à sa forme définitive.

Le moule ébaucheur se compose d'un corps coupé en deux ou plusieurs parties. Le corps est ouvert en haut et en bas et correspond à la forme de l'ébauche en position retournée :

- La partie basse du corps du moule est à la forme définitive de la bague et le bec d'insufflation ou le mandrin y pénètre par cette ouverture,

- La partie haute du moule se ferme par un couvercle après que le gob venant de la goulotte soit tombé dans le moule.

Le soufflage de l'ébauche creuse dans le moule ébaucheur est le procédé le plus ancien utilisé surtout lorsque le pressage par un mandrin n'est pas possible, c'est-à-dire pour les bouteilles de grandes dimensions.

0149580

3

Le pressage de l'ébauche par un mandrin est la technique la plus récente ; ce procédé est intéressant car il permet la réalisation d'une ébauche très régulière puisque le mandrin perce le gob tombé dans le moule et refoule le verre contre toutes les parois du moule ; la forme et l'épaisseur de l'ébauche correspondent donc à la précision du moule.

Au contraire, les ébauches réalisées par soufflage sont beaucoup moins régulières, car le perçage d'une cavité dans le gob, le refoulement du verre le long des parois et contre le fond du moule se font par soufflage de façon très régulière, sans à-coups, pour ne pas "brusquer" la masse de verre. Or, cette masse de verre n'est pas à une température parfaitement homogène dans toute son épaisseur puisqu'elle a moulé ou glissé dans la goulotte et s'est refroidie en général de façon très irrégulière. La viscosité du verre est donc très différente d'un point à l'autre de la masse, ce qui se traduit par des épaisseurs variant de façon importante et imprévisible. Comme l'épaisseur de la bouteille réalisée dans le moule finisseur correspond à l'épaisseur de l'ébauche, il faut surdimensionner le gob pour que l'épaisseur la plus faible de la paroi de la bouteille soit suffisante pour satisfaire aux conditions de résistance et autres caractéristiques mécaniques.

Or, en général, dans les bouteilles, il y a une zone périphérique de faible épaisseur résultant de l'irrégularité ou de l'incontrôlabilité de l'épaisseur de l'ébauche selon le procédé soufflé-soufflé.

Ce problème a été résolu dans la fabrication de récipients ou de flacons de petites dimensions car, dans ce cas, il est possible d'utiliser le procédé "presse-soufflé". En effet, l'encombrement possible actuellement sur les machines ne permet de réaliser que des mandrins à faible course et par suite le pressage de petites bouteilles ou flacons. Ces bouteilles présentent à la sortie

.4

du moule finisseur, une épaisseur très régulière sans zone périphérique d'épaisseur nettement diminuée. Cela permet de réaliser des bouteilles très légères donc de coût réduit.

Malheureusement, ce procédé n'est pas applicable actuellement aux bouteilles de dimensions plus grandes.

Or, ce serait précisément pour de telles bouteilles que les avantages seraient les plus intéressants à la fois pour réduire le coût des bouteilles traditionnelles, permettre de concurrencer les emballages en matière autre que le verre en évitant les problèmes de pollution que présente la destruction de certaines d'entre elles et d'augmenter les caractéristiques de présentation et de mise en valeur des liquides ainsi embouteillés.

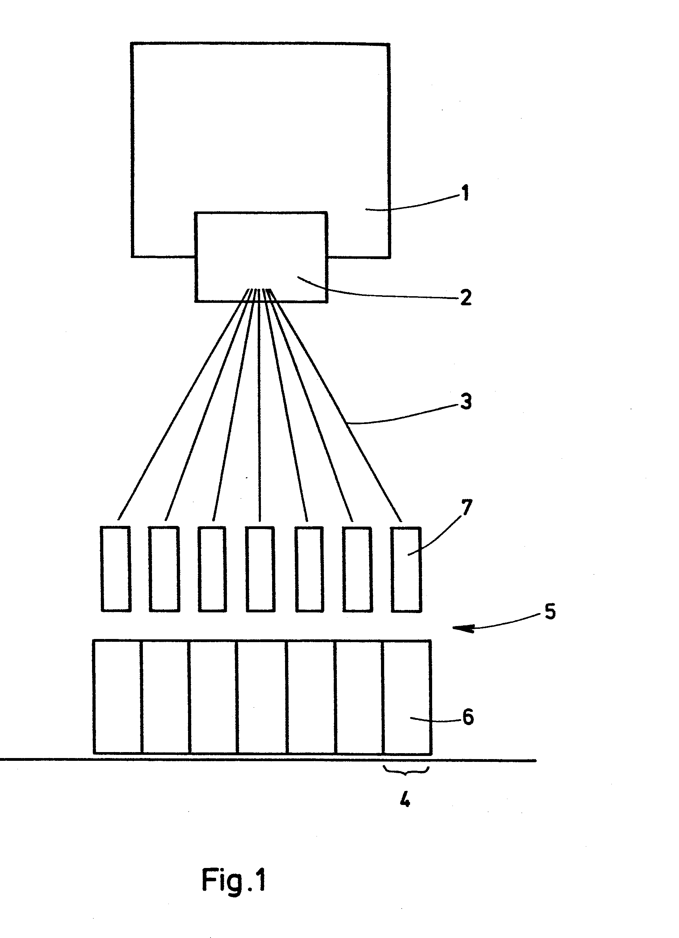

La figure 1 montre une installation connue qui se compose d'un four à verre 1 relié à un dispositif d'alimentation 2 (feeder) fournissant des masses déterminées de verre en fusion par des goulottes 3 aux différents postes 4 de la machine à verre 5 proprement dite. Cette machine 5 se compose de caissons 6 contenant les mécanismes et les alimentations en fluide moteur. Au-dessus du caisson, se trouvent les dispositifs 7 formés des moules ébaucheurs et des moules finisseurs.

Actuellement, on peut arrêter des postes de machines à verre sans que l'ensemble de la machine ne le soit. Toutefois, pour l'entretien et pour démonter le mécanisme traditionnel hors de son caisson dans un poste, il est nécessaire d'arrêter le fonctionnement des postes situés de part et d'autre de façon à pouvoir accéder aux conduites de fluides à débrancher.

Sur le plan du rendement, un tel arrêt se traduit par des pertes importantes d'autant plus que la machine fonctionne en continu 24 heures et tous les jours.

La présente invention a pour but de créer des moyens permettant de transformer une installation existante de fabrication de flacons ou de bouteilles selon la technique soufflé-soufflé pour pouvoir fabriquer des bouteilles même de dimensions importantes selon la technique pressé-soufflé notamment pour la fabrication de bouteilles légères tout en conservant la possibilité de travailler indifféremment en soufflé-soufflé ou en pressé-soufflé et sans entraîner de transformation importante à la machine à verre et permettant la mise en place du mécanisme dans chaque caisson indépendamment des caissons adjacents et sans être obligé d'arrêter le fonctionnement de ceux-ci.

A cet effet, la présente invention concerne une installation du type ci-dessus, caractérisée par un fourreau en deux parties :

- une partie supérieure destinée à venir en saillie par rapport au mécanisme pour pénétrer dans le moule de bague et en assurer le centrage,

- une partie inférieure escamotable dans la partie supérieure,

- un ressort de compression agissant sur le fourreau pour faire venir celui-ci en position de sortie,

- un vérin auxiliaire relié au piston du vérin principal pour soulever celui-ci d'une longueur réglable par l'intermédiaire d'une liaison agissant dans le sens vérin auxiliaire - vérin principal ou inversement,

- un fond mobile délimitant avec le piston principal l'une des chambres du vérin principal, ce fond mobile à une section active inférieure à celle du piston principal, étant emmanché sur la tige du piston principal, en-dessous de la partie inférieure du fourreau pour être mobile entre une position basse permettant le mouvement de retrait de l'adapteur de poinçon solidaire de l'extrémité de la tige du piston principal et du fourreau sous la surface du mécanisme et une position haute permettant la montée du piston principal et du poinçon pour effectuer la course de pressage.

6

Une telle installation peut s'incorporer sans difficultés dans les caissons modulaires des machines à verre de type IS existantes ou fabriquées actuellement. Cette incorporation peut se faire sans aucune difficulté pour remplacer les mécanismes traditionnels. L'incorporation ne nécessite aucune modification du fait que son encombrement, grâce aux moyens de l'invention, correspond à la place disponible. De façon générale, le mécanisme selon l'invention est adaptable à des machines à verre équipées d'une simple paraison, c'est-à-dire dans lesquelles chaque poche réalise un seul récipient à la fois ou encore des machines équipées en multiple paraison, c'est-à-dire dans lesquelles chaque poche fabrique à chaque fois plusieurs récipients. Ces poches à multiple paraison peuvent avoir des entraxes très divers de "quatre 1/4", "cinq", "cinq 1/2", "six", "six 1/4", etc... (Il est traditionnel en verrerie d'utiliser des mesures anglo-saxonnes, c'est-à-dire des pouces ") (1" = 25,4 mm).

Grâce à l'invention, la course maximale du poinçon pour le procédé pressé-soufflé est au moins de 8".

Le mécanisme selon l'invention permet l'utilisation des différentes cartouches traditionnelles à changement rapide utilisées actuellement pour le procédé soufflé-soufflé quel que soit le fabricant de ces cartouches. L'utilisateur de l'installation peut ainsi travailler indifféremment selon la technique pressé-soufflé ou la technique soufflé-soufflé.

Grâce aux moyens de l'invention, le ressort agissant sur le fourreau commande une montée qui, dans la technique actuelle, doit être de 23 mm.

Pour la gamme des récipients fabriqués dans le cas d'entraxes égaux ou supérieurs à 5", la machine permet une seconde montée réglable qui en pratique est comprise entre 0 et 27 mm, complémentaire à la montée assurée par le ressort. Cette seconde montée réglable est commandée par le vérin auxiliaire indépendamment du piston principal si bien que pour celui-ci la course complète pour le pressage (au minimum de 8") reste intégralement conservée. La réalisation du mécanisme comme décrit ci-dessus permet une construction extrêmement compacte, permettant un démontage en cascade et une révision complète sur place dans le caisson sans nécessiter l'arrêt des sections situées de part et d'autre de celui, objet de l'intervention. Cela représente un gain de rendement très important puisque seul le mécanisme concerné est arrêté, les autres continuant de fonctionner. De ce fait, le temps d'arrêt est en quelque sorte divisé par trois puisqu'il suffit d'arrêter un seul poste et non trois postes. Par ailleurs, ce mécanisme peut, grâce à son encombrement, qui ne nécessite aucune modification de l'installation existante, être monté au fur et à mesure sur des postes sans nécessiter l'arrêt complet de la machine, ni d'investissements extrêmement lourds correspondant à une modification importante de la machine et de son implantation.

Suivant une autre caractéristique de l'invention, pour augmenter la course du poinçon et passer de 8" à 9", ce qui est possible de façon générale sans avoir à modifier le système de distribution du verre au caisson, il suffit de surélever le dessus des mécanismes par des cales correspondant à cette différence de course, c'est-à-dire 1" (25,4 mm). Des cales de même épaisseur sont également placées sous les supports des axes des porte-moules ébaucheurs et finisseurs ainsi que sous le mécanisme de transfert qui assure le passage des ébauches des moules ébaucheurs vers les moules finisseurs. A l'intérieur du mécanisme proprement dit, il suffit de prévoir également une cale correspondant à cette différence de hauteur.

Suivant une autre caractéristique de l'invention, la liaison entre les deux parties du fourreau permettant l'escamotage de la partie inférieure par rapport à la partie supérieure est assurée par le piston auxiliaire retenant les deux parties en extension et permettant l'escamotage de la partie inférieure dans la partie supérieure.

Bien que la liaison entre les deux parties du fourreau puisse être réalisée directement par un organe retenant les deux pièces entre elles dans la position normale et permettant leur rapprochement pour l'escamotage de la partie inférieure, il est préférable dans le cadre de l'invention pour tenir compte de l'encombrement extrêmement faible disponible, d'utiliser le piston du vérin auxiliaire, piston qui, par ailleurs, transmet ce mouvement au poinçon par l'intermédiaire de la partie inférieure du fourreau.

Pour assurer cette liaison, il est particulièrement intéressant que le piston auxiliaire porte une collerette en forme de demi-coquille, venant prendre appui sur un épaulement de la partie supérieure du fourreau et que l'extrémité inférieure de la branche extérieure du piston auxiliaire comporte un rebord venant s'accrocher sous la collerette supérieure de la partie inférieure du fourreau.

Cette disposition permet l'accrochage entre les deux parties du fourreau par le piston tout en ne compliquant pas les opérations de montage et de démontage.

De façon intéressante, pour éviter toute rotation relative des deux fourreaux et pour assurer une continuité au moins partielle entre les deux fourreaux pour le guidage de l'adapteur, les deux parties du fourreau sont terminées au niveau de leur partie commune par des bords en créneaux imbriqués les uns dans les autres et solidarisant en rotation les deux parties du fourreau.

Suivant une autre caractéristique de l'invention, le vérin auxiliaire est formé par une chemise intérieure et une chemise extérieure reliée l'une à l'autre, pour délimiter un volume annulaire, et le piston auxiliaire est un piston à section en forme de U renversé, à cheval sur la chemise intérieure, la branche fermant la chambre du vérin auxiliaire par rapport à la chemise à l'intérieur de l'intervalle compris entre les chemises et la seconde branche s'applique contre la surface extérieure de la chemise pour compléter l'étanchéité de la chambre du vérin auxiliaire.

Cette réalisation du vérin auxiliaire permet une construction particulièrement compacte ; la branche du piston annulaire située du côté de l'axe du mécanisme constitue ainsi en même temps la tige de piston transmettant le mouvement du piston par l'intermédiaire de la partie inférieure du fourreau, à l'adapteur de poinçon.

Suivant une autre caractéristique de l'invention, le ressort de compression agissant dans le sens du soulèvement sur le fourreau est logé dans un volume annulaire délimité par la chemise extérieure du vérin auxiliaire et le fourreau extérieur prolongeant la paroi cylindrique du vérin principal, et le fourreau comporte une collerette pour coopérer avec le ressort.

Grâce à cette collerette, il est possible de placer le ressort à l'extérieur du vérin auxiliaire, dans le volume ainsi disponible. Cette collerette ne gêne pas le mouvement du piston du vérin auxiliaire puisque cette collerette vient en butée contre la partie supérieure du dispositif et que le mouvement du fourreau est le premier mouvement exécuté au cours du cycle de fonctionnement du mécanisme. Cette disposition du ressort et de la collerette transmettant l'effort du ressort au fourreau permet ainsi la mise en place du vérin auxiliaire dans ce volume annulaire intermédiaire. Ainsi, malgré la section verticale relativement faible du vérin, du fait qu'il s'agit d'un vérin annulaire, celui-ci peut développer les efforts nécessaires à la commande du mouvement du poinçon au cours de la seconde phase de déplacement des pièces selon l'invention.

10

Suivant une autre caractéristique de l'invention, la partie inférieure du fourreau présente à son bord inférieur une collerette pour coppérer avec le talon de l'adapteur de poinçon, de façon à pouvoir être tirée en position de retrait par l'adapteur de poinçon lorsque le vérin principal est commandé dans le sens du retrait (alimentation de la seconde chambre).

Cette caractéristique offre l'avantage de permettre la transmission particulièrement simple du mouvement du vérin auxiliaire. Du fait de cette liaison par un talon et une collerette, on a une liaison unidirectionnelle pour chaque pièce permettant d'utiliser la partie inférieure du fourreau comme organe de transmission périphérique agissant sur le talon de l'adapteur. Cet organe transmet ainsi le mouvement de façon particulièrement régulière puisque de façon périphérique. De plus, cette pièce peut ainsi se réaliser avec une épaisseur réduite, allant dans le sens d'une plus grande compacité de l'ensemble du mécanisme. Comme, par ailleurs, cette liaison ne se fait que dans une direction pour chaque pièce, c'est-à-dire que le piston auxiliaire ne peut que tirer vers le haut et la partie inférieure du fourreau ne peut tirer que vers le bas, lorsque l'une ou l'autre des deux pièces agit, cela permet le mouvement d'escamotage de la partie inférieure du fourreau limitant l'espace pour la montée du fond mobile comme cela sera précisé ci-après.

Suivant une autre caractéristique de l'invention, le piston auxiliaire porte un organe de réglage de course limitant la course active du piston auxiliaire entraînant l'équipage mobile formé par le piston principal, la tige de piston, l'adapteur de poinçon et le poinçon.

Cet organe adapteur qui se trouve dans la partie supérieure du mécanisme est donc d'un accès très facile. Il peut être remplacé par un organe adapteur de longueur différente sans nécessiter le démontage de l'ensemble

11

du mécanisme. On peut ainsi transformer le mécanisme pour l'adapter à des courses intermédiaires différentes qui, comme précisé ci-dessus, sont comprises en pratique entre zéro et 27 mm.

Suivant une autre caractéristique de l'invention, le fond mobile est une pièce annulaire logée de façon coulissante dans le cylindre du vérin principal, et emmanchée sur la tige du piston auxiliaire, ainsi que sur un fourreau coaxial au vérin principal et définissant sur le fond mobile une section active, inférieure à la section réelle du fond mobile.

La réalisation de ce fond mobile en deux parties permet de résoudre de façon très simple et compacte, la subdivision du fond mobile en deux parties de sections différentes de façon que le fond mobile présente une sur- face (ou section active) inférieure à celle du piston de façon à permettre le fonctionnement du vérin. Comme cela sera précisé ultérieurement, la différence des efforts exercés sur le piston principal et sur la surface active du fond mobile, diminuée de la force antagoniste développée par le ressort tendant à soulever le fourreau, doit donner une résultante d'intensité suffisante dirigée vers le bas pour pouvoir rappeler l'équipage mobile formé par le piston principal, sa tige, son adapteur et le poinçon en position basse, c'est-à-dire en position de repos, à la fin d'un cycle de travail.

De façon plus particulière, le fond mobile est constitué de deux parties délimitant entre elles un intervalle destiné à recevoir le fourreau, la partie du fond mobile coulissant d'une part sur la tige de piston et d'autre part, sur la surface correspondante du fourreau délimitant la seconde chambre du vérin principal, alors que l'autre partie fixée à la précédente assure le guidage du fond mobile sur la surface intérieure du cylindre du vérin principal ainsi que le guidage sur l'autre face du fourreau, cette partie étant munie d'un canal de

0149580

12

communication.

Ce mode de réalisation du fond mobile est particulièrement intéressant sur le plan pratique puisqu'il permet de résoudre de délicats problèmes d'usinage. En effet, en réalisant le fond mobile en deux parties qui se réunissent sur la chemise constituant en fait le prolongement à section réduite du cylindre du vérin principal, on facilite la réalisation et la mise en place des moyens de guidage et d'étanchéité. De ce fait, il est particulièrement intéressant de profiter de cette réalisation du fond mobile en deux parties concentriques, pour assurer le blocage en rotation du fond mobile. A cet effet, le fond mobile comporte au moins un doigt de guidage coopérant avec une rainure réalisée dans la surface intérieure du cylindre du vérin principal pour assurer le blocage en rotation du fond mobile tout en permettant sa libre translation.

En pratique, il est intéressant que le fond mobile comporte au moins deux doigts de guidage pour assurer un guidage symétrique. Le cas échéant, ce nombre de doigts de guidage peut être augmenté.

Suivant une autre caractéristique de l'invention, le piston du vérin principal comporte un pion d'arrêt chargé par un ressort et destiné à venir dans un logement correspondant du fond mobile pour permettre le blocage en rotation du piston principal par rapport au mécanisme, par l'intermédiaire du fond mobile pour permettre le vissage ou le dévissage d'une pièce sur la tige du piston.

Le blocage en rotation du piston principal est un élément important pour la mise en place de l'adapteur, du poinçon et de la pipette de refroidissement, éléments qui doivent être remplacés en fonction des fabrications à réaliser. Ce blocage en rotation du piston ne devient actif que si l'on tente de faire tourner le piston principal lorsque celui-ci est en position haute.

13

Ce blocage en rotation n'intervient pas ou n'a pas à intervenir au cours du fonctionnement normal du mécanisme puisque le pion d'arrêt s'escamote dans le sens de la translation du piston.

Un dispositif similaire est prévu sur la plaque constituant le fond du mécanisme pour permettre l'amortissement de fin de course du piston principal.

Une installation conforme à l'invention est représentée, à titre d'exemple non limitatif sur les dessins ci-joints dans lesquels :

- La figure 1 est un schéma d'ensemble de l'installation,

- La figure 2 représente la partie inférieure d'un mécanisme en coupe verticale,

- La figure 3 est formée des figures 3A, 3B, 3C et 3D.

- La figure 3A est une demi-coupe verticale d'un mécanisme en position d'attente en début de cycle ;

- La figure 3B est une demi-coupe analogue à celle de la figure 3A, montrant la position des pièces après la première phase de mouvement au cours d'un cycle,

- La figure 3C est une demi-coupe analogue à celle de la figure 3A montrant la position des pièces après la deuxième phase de mouvement au cours d'un cycle,

- La figure 3D est une demi-coupe analogue à celle de la figure 3A montrant la position des pièces après la troisième phase de mouvement au cours d'un cycle.

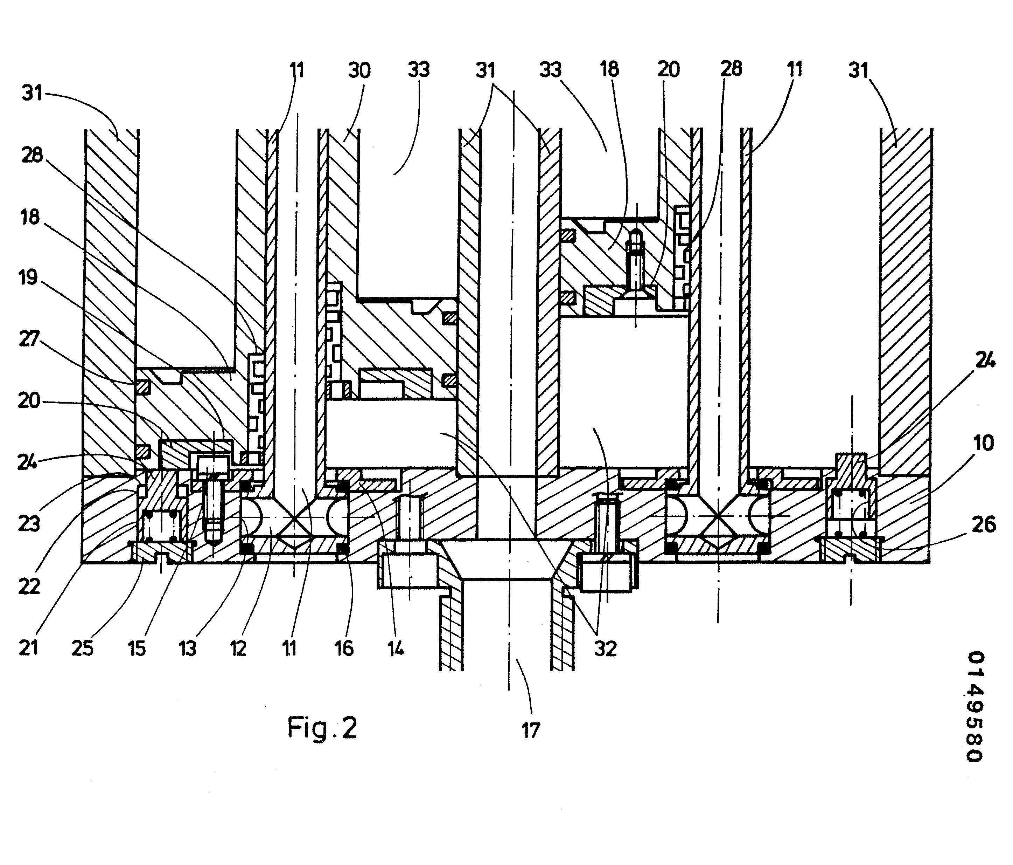

La figure 2 est une vue en coupe partielle du mécanisme d'un poste 4 à double paraison, c'est-à-dire à deux mécanismes jumelés identiques, symétriques, par rapport à l'axe médian de la figure et dont un seul sera décrit.

Le mécanisme se compose d'une plaque 10 constituant le fond inférieur pour l'emplacement de deux mécanismes. Chaque emplacement comporte un axe creux 11 central servant à la fois au guidage du piston et à l'alimentation en fluide de refroidissement.

L'axe 11 terminé à sa base par un Té de branchement 12 est fixé dans un logement 13 de la plaque 10 par une plaque de recouvrement 14 relié à la plaque 10 par des vis 15. L'alimentation en fluide de refroidissement se fait par des raccords latéraux et des perçages non représentés. L'étanchéité est réalisée par des joints 16. La plaque 10 est également munie d'un pied support traditionnel 17 pour la sortie du fluide de refroidissement qui est par exemple de l'air. Ce pied support 17 permet la fixation et le réglage en hauteur du mécanisme·

Selón la figure 2, ce raccord 17 communique avec l'intervalle entre les deux mécanismes jumelés et correspond à la sortie du fluide de refroidissement.

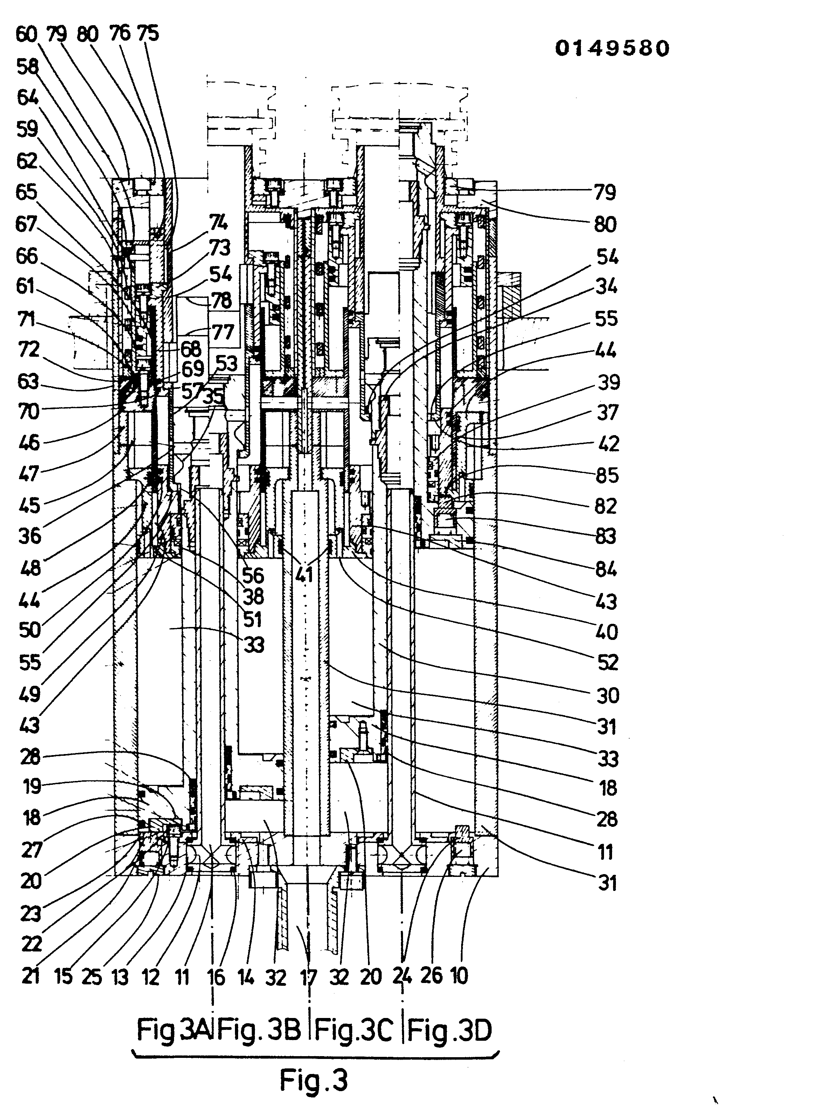

La figure 2 qui correspond aux demi-coupes des figures 3, 4, 5, 6 montre trois positions différentes du piston 18.

A gauche dans la figure 2, le piston 18 est appliqué contre le fond 10. La face inférieure du piston 18 comporte une gorge périphérique 19 correspondant aux têtes des vis 15, qui sont en saillie. Cette gorge 19 reçoit une garniture 20, ce qui permet au piston 18 de venir contre le fond 10 quelle que soit sa position angulaire par rapport au fond.

La figure 2 montre également un plot 21 placé dans un logement 22 du fond 10. Le logement 22 est à deux sections définissant un épaulement 23 et le plot 21 a une forme correspondante avec une tête 24 qui peut venir en saillie par rapport à la face supérieure de la plaque 10. Le plot 21 est introduit dans son logement 22 par la face inférieure de la plaque et y est bloqué par une vis 25 avec interposition d'un ressort de compression 26. Ces différents plots 21 sont destinés à permettre l'amortissement en fin de course du piston 18. Le piston 18 est également muni sur sa face extérieure de segments de glissement et d'étanchéité 27. Il en est de même de la face intérieure du piston 18 qui comporte un logement 28 circulaire recevant des segments de guidage et d'étanchéité 29 montés dans des bagues et coopérant avec la surface extérieure de l'axe creux 11. Le piston 18 est solidaire d'une tige creuse 30 emmanchée sur l'axe 11. Le vérin principal du mécanisme se compose d'un cylindre 31 concentrique à l'axe 11 et au piston 18 ; ce dernier subdivise le cylindre en une chambre inférieure 32 par ailleurs délimitée par la plaque 10 et une chambre supérieure 33 délimitée par des moyens apparaissant aux figures 3, 4, 5. Le cylindre 31 est placé sur un épaulement de la plaque 10 et le serrage est assuré par des tirants reliant les différentes parties du mécanisme. Ces moyens ne sont pas représentés.

La figure 3A montre les différents éléments du mécanisme en position initiale ou position de repos. Selon cette figure 3A, la partie supérieure de la tige 30 de piston porte une pièce de liaison 34, creuse, recevant l'adapteur de poinçon 35. Cet adapteur 35 également creux reçoit le poinçon non représenté. Le poinçon se présente en général comme une pièce creuse dont la forme extérieure correspond à l'ébauche en verre à réaliser. L'adapteur 35 comporte un orifice 36 pour le passage du fluide de refroidissement circulant dans le poinçon. Entre la tige 30 et le cylindre 31, il y a un fond mobile 37 destiné à coulisser sur la surface intérieure du cylindre 31 et sur la surface extérieure de la tige 30 de façon à fermer la chambre 33 dans les conditions décrites ultérieurement. Pour cela, le fond mobile 37 comporte des segments de guidage et d'étanchéité 38 montés dans des bagues placées dans un logement 39 et maintenues par une pièce 40 elle-même munie d'une bague de guidage 41 coopérant avec le cylindre 31. Le fond mobile 37 comporte également une gorge intérieure 42 dont la fonction apparaîtra ci-après ainsi qu'une gorge 43 délimitée par les pièces 37 et 40 et destinée à recevoir la partie inférieure d'une chemise.

Enfin, en partie haute, le fond mobile 37 est muni d'un ou plusieurs doigts de guidage 44, en saillie, venant dans une rainure 45, réalisée dans la face intérieure du cylindre 31 et qui assure le blocage en rotation du fond mobile 37. Au dessus du cylindre 31 du vérin principal, il est prévu une chemise dont le talon périphérique 46 s'appuie sur le cylindre 31 par l'intermédiaire d'une bague 47. La partie inférieure 48 de cette chemise assure le guidage et l'étanchéité en coopération avec la gorge 43 du fond mobile 37. En effet, la partie intérieure 49 du fond mobile 37 est munie de joints d'étanchéité 50 s'appliquant sur la face intérieure de la partie 48 de la chemise ; l'étanchéité de la chambre 33 est par ailleurs assurée par le contact du fond 37 (pièce 40) et de la tige 30.

Pour éviter la formation d'un coussin d'air, la gorge 43 est reliée à la chambre 33 par un perçage 51 ; pour une raison analogue, il est prévu un passage 52 entre la partie de la chambre 33 en dessous du fond mobile et la partie au-dessus du niveau de la rainure 45. Au-dessus du fond mobile, il est prévu un fourreau mobile en deux parties 53, 54 de même axe et de même section, correspondant à celle de l'adapteur 35. La partie inférieure 53 se termine par une collerette intérieure 55 destinée à coopérer avec le bord 56 de l'adapteur en s'accrochant à celui-ci.

La partie 53 peut tirer l'adapteur 35 vers le haut et l'adapteur 35 peut tirer la partie 53 vers le bas par cette liaison des éléments 55, 56.

Le bord supérieur de la partie 53 se termine par un rebord 57 tourné vers l'extérieur et destiné à l'accrochage avec le piston du vérin auxiliaire.

Au-dessus de la partie 53 se trouve la partie supérieure 54 dont l'extrémité supérieure assure le centrage du moule de bague. Cette partie supérieure 54 comporte une collerette 58 pour coopérer avec un ressort de compression 59 agissant dans le sens du soulèvement de la partie 54. Le ressort 59 est de préférence un ressort hélicoïdal de section rectangulaire prenant appui, d'une part,

17

dans une gorge périphérique 60 de la collerette 58 et, d'autre part, sur le talon 46 par l'intermédiaire d'une cale 61.

Le ressort 59 est placé dans un logement délimité par une chemise 62 placée dans un fourreau extérieur 63 dans le prolongement du cylindre 31. Le logement est délimité intérieurement par une chemise 64 servant au guidage du piston auxiliaire. Le vérin auxiliaire se compose d'une chambre annulaire concentrique à l'axe du mécanisme et délimitée intérieurement par la partie supérieure 65 de la chemise (46, 48) et extérieurement par la chemise 64.

Le piston du vérin auxiliaire est un piston annulaire à section en forme de U renversé enjambant la partie supérieure 65 de la chemise dont une branche (ou couronne) 66 est munie de bagues d'étanchéité 67 glissant sur la chemise 64, du côté intérieur et dont l'autre branche 68, munie de bagues d'étanchéité 69, s'appuie intérieurement (c'est-à-dire extérieurement du vérin) sur la partie supérieure 65. Cette branche ou couronne 68 se termine par l'épaulement 70 coopérant avec l'épaulement 57 de la partie inférieure 35 du fourreau.

Il est à remarquer que la chemise 64 comporte à sa base un épaulement 71 par lequel elle est fixée par des vis 72 sur le talon 46.

Dans sa partie supérieure, le piston est muni d'une collerette 73 formée par exemple par deux demi-coquilles fixées par des vis 74 sur le piston. Des cales de hauteurs différentes 76 viennent éventuellement dans deux gorges périphériques 75 de la partie supérieure 54 de façon à permettre un mouvement relatif entre le piston auxiliaire (66, 68, 73) et la partie supérieure 54 sur une longueur correspondant à la hauteur de cette cale 76. Ces cales 76 peuvent être mises en place en retirant la plaque d'usure 80.

Pour faciliter le mouvement relatif des parties

18

53, 54, leurs bords en regard 77, 78 ont une forme de créneaux imbriqués les uns dans les autres qui solidarisent ces deux parties 53, 54 en rotation tout en permettant leur mouvement de translation télescopique. Le dessus du mécanisme est fermé par un chapeau 79 portant la plaque d'usure 80 à l'endroit d'appui du moule de bague autour de l'orifice de sortie de la partie 54 et du poinçon.

Les moyens d'alimentation en fluide moteur (air comprimé) du vérin principal et du vérin auxiliaire n'ont pas été représentés aux figures. Il convient de noter que le vérin principal est un vérin à double effet avec deux alimentations distinctes une par chambre alors que le vérin auxiliaire est un vérin à simple effet dont le mouvement de retour est assuré par la course de retour du vérin principal.

Suivant les mouvements des vérins, les chambres qui ne sont pas actives sont mises en communication avec le retour du fluide moteur ou la mise à l'air extérieur.

Dans la description de la structure du mécanisme ci-dessus, il a été fait référence à des orientations telles que haut, bas, supérieur, inférieur, etc... Il ne s'agit là que de la disposition la plus usuelle et l'inversion de certaines pièces ou de leur mouvement est envisageable dans le cadre de l'invention.

La même remarque s'applique à la description du fonctionnement qui sera faite ci-après :

Description du fonctionnement :

Cette description sera faite à l'aide des figures 3A, 3B, 3C, 3D. La figure 3A représente la position initiale des pièces ; la figure 3B, une première position après un premier déplacement de certaines des pièces ; la figure 3C, une seconde position après un second déplacement de certaines pièces et enfin la figure 3D représente la position dite "de pressage".

1) Position d'attente  (figure 3A)

L'ébauche pressée au cours de l'opération précédente a été transportée avec le moule de bague dans le moule finisseur et les pièces du moule ébaucheur sont en position de repos ; le fourreau de centrage est escamoté en dessous de la surface supérieure du mécanisme.

De façon plus détaillée :

Le piston 18 est appliqué contre le fond de la plaque 10 par l'air comprimé envoyé dans la chambre 33 à la fin du cycle précédent. La tige 30 du piston et l'adapteur 35 portant le poinçon sont en position basse. Dans cette position, le bord 56 de l'adapteur 35 retient la collerette 55 de la partie inférieure 53 dont le rebord tire sur l'épaulement 70 du piston auxiliaire. La collerette 73 tire sur la partie supérieure 54 en comprimant le ressort 59. Ainsi le fourreau est en position basse, en extension, puisque les parties 53 et 54 sont écartées l'une de l'autre au maximum.

Le fond mobile 37 est en appui en position basse ; cette position est définie par la venue en butée du piston 18, sur la plaque 10. Il est en effet à remarquer que le piston 18 est soumis à la résultante des efforts exercés par la pression dans la chambre 33, d'une part sur le piston et d'autre part, sur une fraction seulement de la surface du fond mobile 37. Le piston auxiliaire 66, 68 est soumis à l'action de la partie supérieure 54 et est en position basse, la chambre du vérin auxiliaire délimitée par ce piston ayant été mise à l'atmosphère pour permettre l'évacuation de l'air et la descente libre du piston auxiliaire.

2) Centrage du moule de bague (figure 3B)

A partir de la position d'attente décrite ci-dessus, le cycle de travail commence dans une première phase par la libération du piston principal 18, c'est-à-dire la mise à l'atmosphère de la chambre 33 du vérin principal. Sous l'effet du ressort 59 agissant dans le sens du soulèvement sur la partie supérieure 54, celle-ci se soulève et vient en saillie par rapport à la surface supérieure du

0149580

20

mécanisme dans le moule de bague qui s'est mis en place ; le bord extérieur de cette partie supérieure 54 étant chanfreiné. Cela facilite son introduction dans le moule de bague. En fin de course, cette partie supérieure 54 est en appui contre la face inférieure du chapeau 79. Le bord inférieur de la gorge 75 entraîne vers le haut la collerette 73 et le piston auxiliaire ; la liaison entre l'épaulement 70 et le rebord 57 ainsi qu'entre la collerette 55 et le rebord 56 de l'adapteur 35, provoque un léger soulèvement de l'ensemble piston, tige, adapteur, poinçon. En fin de mouvement, les différentes pièces occupent les positions suivantes :

- le piston 18 est légèrement soulevé ; aucune pression ne règne dans les chambres 32, 33,

- le fond mobile 37 n'a été entraîné par aucune pièce et reste libre sans position déterminée,

- le fourreau 53, 54 est en position haute et en extension.

- le piston auxiliaire 66, 68, 73 est dans une position intermédiaire de soulèvement ; la chambre du vérin auxiliaire n'a reçu aucun fluide moteur.

3) <u>Chargement du moule</u> (figure 3C)

Après la mise en place du moule de bague et du moule ébaucheur dont la partie supérieure (couvercle) est ouverte au cours de la phase précédente, une masse mesurée de verre tombe dans le moule qui est alors fermé par la mise en place du couvercle. Avant que la masse ne descende dans le moule ébaucheur, le mécanisme décrit ci-dessus a fait monter le poinçon en alimentant le vérin auxiliaire pour soulever le piston auxiliaire. La course du piston auxiliaire est limitée par l'organe espaceur 76 qui vient buter contre le dessous de la plaque d'usure 80. Le piston auxiliaire entraîne par son épaulement 70, le rebord 57 et ainsi la partie inférieure 53 dont la collerette accroche le talon 56 et soulève l'adapteur 35, et par suite le poinçon. Le poinçon est ainsi positionné et prêt à pénétrer dans la masse de verre.

Au cours de ce mouvement, le fond mobile 37 n'intervient pas.

A la fin de cette seconde phase, les pièces occupent les positions suivantes :

- Le piston 18 est dans une position intermédiaire soulevée ; aucune pression ne règne dans les chambres 32, 33,

- le fond mobile est toujours en position indéterminée,

- la partie inférieure 53 du fourreau 53, 54 est en position haute et les deux parties 53, 54 sont jointives.

- le piston auxiliaire est en butée en position haute ou contre les espaceurs 76.

4) Pressage de l'ébauche (figure 2D)

Du fluide moteur (air comprimé) est introduit dans la chambre 32 du vérin principal dont le piston 18 se soulève ; il soulève le poinçon qui assure le pressage de l'ébauche dans le moule ébaucheur. Pour que la course du poinçon soit suffisante, le piston 18 soulève le fond mobile 37 qui vient alors en position haute, escamotée.

A la fin de cette troisième phase, les pièces occupent les positions suivantes :

- le piston 18 est en position haute de fin de course,

- le fond mobile 37 est en position haute, escamotée,

- le fourreau 53, 54 est en position haute, comprimée,

- le piston auxiliaire 66, 68, 73 est en position haute de fin de course ou contre les espacements 76.

5) Mouvement de retour en fin de cycle (figure 3A)

Après la phase de pressage, le vérin principal est commandé pour remettre les pièces en position initiale.

Pour cela, le fluide moteur est envoyé dans la chambre 33 si bien que le piston 18, la tige 30, l'adapteur 35 et le poinçon descendent.

Le talon 56 de l'adapteur 35 tire la partie inférieure 53 vers le bas ; celle-ci entraîne le piston auxiliaire 66, 68 dont la coquille 73 entraîne la partie supérieure 54 qui comprime le ressort 59.

Lorsque la collerette 55 rencontre le fond mobile 37, elle entraîne celui-ci puisque la force descendante, agissant sur l'équipage piston 18, tige 30, adapteur 35, poinçon, piston auxiliaire 66, 68, 73, fourreau 53, 54, est la résultante des efforts antagonistes exercée par le fluide moteur sur le piston 18 et la partie active du fond mobile 37, résultante diminuée de l'effort antagoniste exercé par le ressort 59.

A la fin de ce mouvement de retour, les pièces occupent la position dite "d'attente" déjà décrite ci-dessus.

La figure 6 montre également le blocage du piston principal 18 sur le fond mobile 37 par un pion escamotable 82 soumis à l'action d'un ressort 83 et maintenu dans son logement par un bouchon vissé 84. La tête de ce pion peut venir dans un logement 85 réalisé dans le fond mobile 37.

Lorsque le mécanisme fonctionne, le piston principal 18 n'est pas orienté angulairement par rapport au fond mobile 37 si bien que la tête du pion 82 ne se trouve pas nécessairement en face du logement 85 ; le pion s'escamote alors en comprimant le ressort 83. Par contre, pour dévisser l'adapteur de poinçon, on tourne le piston 18 en position haute jusqu'à encliquetage du pion 82 dans le logement 85, ce qui bloque la rotation du piston 18 et permet le dévissage et le vissage.

Dans le cas d'utilisation de noyaux nécessitant une course de faible amplitude, un espaceur non représenté sur les figures, est placé à l'intérieur du

23

fourreau 53, 54 avant vissage de l'espaceur de poinçon 35.

La hauteur de cet adapteur est calculée en fonction de la différence entre la course maximale permise et la course nécessaire, de manière à utiliser les possibilités de réglage de la position d'attente du noyau avant pressage telle que décrite à la figure 5.

0149580

24

R E V E N D I C A T I O N S

1) Installation de fabrication de récipients en verre de type bouteille et flacon à ouverture moyenne, ou étroite, mettant en oeuvre le procédé soufflé - soufflé ou pressé - soufflé, installation comportant des moules ébaucheurs et des moules finisseurs avec des caissons modulaires équipés en simple ou multiple paraison, recevant des mécanismes de commande placés sous les moules ébaucheurs pour commander les poinçons, chaque mécanisme comprenant au moins un vérin à double effet dont le piston commande le mouvement du poinçon de pressage, un circuit de refroidissement dont le fluide circule dans le mécanisme et dans le poinçon, une alimentation en fluide moteur pour commander le vérin, installation caractérisée en ce que le mécanisme comporte :

- un fourreau en deux parties,

- une partie supérieure (54) destinée à venir en saillie par rapport au mécanisme pour pénétrer dans le moule de bague et en assurer le centrage,

- une partie inférieure (53) escamotable dans la partie supérieure (54),

- un ressort de compression (59) agissant sur le fourreau (53, 54) pour faire venir celui-ci en position de sortie,

- un vérin auxiliaire (66, 68) relié au piston (18) du vérin principal pour soulever celui-ci d'une longueur réglable, par l'intermédiaire d'une liaison (53) agissant dans le sens vérin auxiliaire - vérin principal ou inversement,

- un fond mobile (37) délimitant avec le piston principal (18) l'une des chambres (33) du vérin principal, ce fond mobile (37) à section active, inférieure à celle du piston principal (18), étant emmanché sur la tige (30) du piston principal, en-dessous de la partie inférieure (53) du fourreau (53, 54) pour être mobile entre une position basse permettant le mouvement de retrait de

25

l'adapteur de poinçon solidaire de l'extrémité de la tige du piston principal (18) et du fourreau (53, 54) sous la surface du mécanisme, et une position haute permettant la montée du piston principal (18) et du poinçon pour effectuer la course de pressage.

2) Installation selon la revendication 1, caractérisée en ce que la liaison entre les deux parties (53, 54) du fourreau permettant l'escamotage de la partie inférieure (53) par rapport à la partie supérieure (54) est assurée par le piston auxiliaire (66, 68, 70, 73) retenant les deux parties (53, 54) en extension et permettant l'escamotage de la partie inférieure (53) dans la partie supérieure (54).

3) Installation selon la revendication 2, caractérisée en ce que les deux parties (53, 54) du fourreau sont terminées au niveau de leur partie commune par des bords en créneaux (77, 78) imbriqués les uns dans les autres et solidarisant en rotation les deux parties du fourreau.

4) Installation selon la revendication 1, caractérisée en ce que le vérin auxiliaire est formé par une chemise intérieure (65) et une chemise extérieure (64), reliées (71, 72) l'une à l'autre, pour délimiter un volume annulaire, et le piston auxiliaire (66, 68) est un piston à section en forme de U renversé, à cheval sur la chemise intérieure (65), la branche (66) fermant la chambre du vérin auxiliaire par rapport à la chemise (64) à l'intérieur de l'intervalle compris entre les chemises (65, 64) et la seconde branche (68) s'applique contre la surface extérieure de la chemise (65) pour compléter l'étanchéité de la chambre du vérin auxiliaire.

5) Installation selon la revendication 4, caractérisée en ce que le piston auxiliaire (66, 68) porte une collerette (73) en forme de demi-coquille venant prendre dans une rainure longitudinale (75) de la partie supérieure (54) du fourreau et l'extrémité inférieure de la branche extérieure (68) du piston auxiliaire (66, 68) comporte un rebord (70) venant s'accrocher sous la collerette (57) supérieure de la partie inférieure (53) du fourreau (53, 54).

6) Installation selon l'une quelconque des revendications 1 à 5, caractérisée en ce que le ressort (59) de compression agissant dans le sens du soulèvement sur le fourreau (53, 54) est logé dans un volume annulaire délimité par la chemise extérieure (64) du vérin auxiliaire et le fourreau extérieur (63) prolongeant la paroi cylindrique (31) du vérin principal, et le fourreau (53, 54) comporte une collerette (60) pour coopérer avec le ressort (59).

7) Installation selon la revendication 1, caractérisée en ce que la partie inférieure (53) du fourreau (53, 54) présente à son bord inférieur une collerette (55) pour coopérer avec le talon (56) de l'adapteur (35) de poinçon, de façon à pouvoir être tirée en position de retrait par l'adapteur de poinçon (35) lorsque le vérin principal (18, 32, 33) est commandé dans le sens du retrait (alimentation de la seconde chambre 33).

8) Installation selon la revendication 1, caractérisée en ce que le piston auxiliaire (66, 68) porte un organe (76) de réglage de course, limitant la course active du piston auxiliaire entraînant l'équipage mobile formé par le piston principal (18) la tige de piston (30), l'adapteur de poinçon (35) et le poinçon.

9) Installation selon la revendication 1, caractérisée en ce que le fond mobile (37) est une pièce annulaire logée de façon coulissante dans le cylindre (31) du vérin principal, et emmanché sur la tige (30) du piston auxiliaire, ainsi que sur une chemise (48) coaxiale au vérin principal et définissant sur le fond mobile une section active, inférieure à la section réelle du fond mobile.

27

10) Installation selon la revendication 9, caractérisée en ce que le fond mobile (37) est constitué de deux parties (49, 40) délimitant entre elles un intervalle (43) destiné à recevoir la chemise (48), la partie (49) du fond mobile (37) coulissant, d'une part, sur la tige de piston (30) et, d'autre part, sur la surface correspondante de la chemise (48) délimitant la seconde chambre (33) du vérin principal, alors que l'autre partie (40) fixée à la précédente assure le guidage du fond mobile sur la surface intérieure du cylindre (31) du vérin principal ainsi que le guidage sur l'autre face de la chemise (48), cette partie étant munie d'un canal de communication (52).

11) Installation selon l'une quelconque des revendications 1, 9, 10, caractérisée en ce que le fond mobile comporte au moins un doigt de guidage (44) coopérant avec une rainure (45) réalisée dans la surface intérieure du cylindre (31) du vérin principal pour assurer le blocage en rotation du fond mobile (37) tout en permettant sa libre translation.

12) Installation selon la revendication 1, caractérisée en ce que le piston (18) du vérin principal comporte un pion d'arrêt (82) chargé par un ressort (83) et destiné à venir dans un logement (85) correspondant du fond mobile (37) pour permettre le blocage en rotation du piston principal (18) par rapport au mécanisme, par l'intermédiaire du fond mobile (37) pour permettre le vissage ou le dévissage d'une pièce sur la tige (30) du piston.

0149580

Fig.1

0149580

Fig.2

0149580

Fig 3A | Fig. 3B | Fig. 3C | Fig. 3D

Fig. 3